# EUROPEAN PATENT APPLICATION

(11) **EP 2 747 447 A1**
(43) Date of publication of application: **25.06.2014**
(21) Application number: 12306627.6
(22) Date of filing: 19.12.2012
(51) Int. Cl.: H04Q 11/00, H04J 3/06, H04J 14/08, H04L 12/28, H04L 12/42, H04L 12/43, H04L 12/64, H04Q 11/04

(54) **Transmission of data bursts in an optical burst switching network**

(71) Applicant: Alcatel Lucent, 75007 Paris (FR)
(72) Inventor: Cazzaniga, Giorgio, 23804 Monte Marenzo (IT); Loehr, Juergen, 70190 Stuttgart (DE)
(74) Representative: Colombo, Stefano Paolo

(57) **Abstract**

It is disclosed a method for transmitting data bursts in a communication network, the communication network comprising a number of nodes, wherein each node is configured to use respective timeslots for transmitting the data bursts. The method comprises: selecting a root node amongst the number of nodes; identifying at least one burst synchronization path from the root node within said communication network comprising the number of nodes; at each of the nodes other than the root node, aligning the used timeslots to the timeslots used by the preceding node along the at least one burst synchronization path; and from a source node of the communication network, transmitting a data burst to a destination node along a route comprised within the at least one burst synchronization path.

## Description

### Technical field

The present invention generally relates to the field of optical communication networks. In particular, the present invention relates to the transmission of data bursts in an optical burst switching network.

### Background art

Optical Burst Switching (OBS) is a technique introduced more than ten years ago (see "Optical Burst Switching (OBS) - A new paradigm for an optical Internet", C. Qiao, M. Yoo, Journal High Speed Networks, vol. 8, pp. 69-84, 1999) for supporting bursty traffic in an optical network.

According to optical burst switching, data units provided by a number of clients are assembled into data bursts at a source node of the optical network and the data bursts are then propagated through the network.

In particular, in a known optical burst switching network, each data burst comprises a header and a payload including the clients' data units. The payload of one single data burst may comprise one data unit, a fraction of a data unit or number of data units. Data units may belong to different types of traffic. In particular, data units may belong to a constant bit rate traffic flow, such as a voice or video traffic flow, or to a packet traffic flow having a variable and possibly unpredictable bit rate, such as a packet traffic flow related to file transfers, e-mail exchange, loading of web pages and on the like. Data units may then comprise IP (Internet Protocol) or Ethernet packets, ATM (Asynchronous Transfer Mode) cells as well as SONET or SDH (Synchronous Digital Hierarchy) frames. Each data burst is transmitted within the optical network and terminated at a respective destination node. Each data burst, once processed by the respective destination node, is then disassembled for recovering the data units contained therein.

In a known optical burst switching network, the transmission of each data burst may be preceded by the transmission of a control packet on a separate control channel, for setting up the connection by reserving an appropriate amount of bandwidth and configuring the switches along a path. Then, the source node of the data bursts does not wait for an acknowledgment for the connection establishment and starts transmitting the data bursts. The control packet typically carries information about the data burst which may comprise a length of the data burst, a destination address, a priority.

### Summary of the invention

The inventors noticed that in an optical burst switching network, collisions among data bursts propagating along different paths and destined to the same node may arise. Indeed, in such optical networks optical buffers are typically not available or, if available, are in the form of fiber delay lines of predetermined length providing limited capabilities in compensating variable delays of the data bursts. Typically, in order to prevent burst collision, scheduling is used to organize the transmission of data bursts so that they do not collide at the receivers.

In particular, in an ideal situation where the propagation delay between any source node and any destination node is zero or is an integer multiple of the data burst duration, different data bursts propagating across the optical network are aligned in time. In other words, the different data bursts propagating across the network are associated to timeslots that are not overlapping. When a node receives and drops data bursts from two or more other nodes of the optical network, the arrival times of such data bursts are separated by an integer multiple of the data burst duration and hence the data bursts do not overlap. This means that the node may correctly distinguish data bursts arriving from different source nodes. In this case, the node correctly drops the data bursts and no loss of data ideally occurs. In this ideal situation, it is possible to allocate any requests as long as the traffic demand does not exceed the capacity available at the source node and at the destination node.

In a real situation, as already discussed above, the propagation delay between two nodes of the optical network is not zero and may not be an integer multiple of the data burst duration. At a destination node collisions may arise when data bursts from two or more other nodes of the optical network arrive at arrival times which are not separated by an integer multiple of the data burst duration and therefore such data bursts may be overlapping. In such a situation, the optical burst receiver is not capable of correctly distinguishing the data bursts arriving from different nodes of the optical network.

In such cases, for avoiding collisions, transmission from one of the two conflicting source nodes may be delayed in time but this means that at the destination node there is some "unused" time between reception of the two data bursts. This results in wasting bandwidth and hence in reducing the efficiency of the transmission.

In principle, in an optical ring network, collisions may be avoided by providing the ring with a hub node that provides full optical/electrical/optical (O/E/O) regeneration for all the wavelengths. The hub node receives all the data bursts circulating in the ring in the form of optical signals, converts each optical signal into an electrical signal and possibly stores such signal into an electronic buffer. This way the electric signals of the data bursts may be adaptively buffered so as to compensate for the different delays due to the propagation. Therefore, the alignment of the data bursts can be restored. Once converted back into optical signals, the data bursts are sent from the hub node to their destination nodes.

However, disadvantageously, provisioning of a hub node for restoring the alignment of the data bursts is applicable only to ring networks and not to more complex network topologies such as multi-ring or meshed topologies. Moreover, provisioning of a hub node with O/E/O regeneration is complex and costly. Indeed, O/E/O regeneration shall be performed on all the wavelengths and this may require a great number of optical burst transmitters and optical burst receivers at the hub node. For instance, considering a ring network operating according to a DWDM scheme (Dense Wavelength Division Multiplexing), up to 80 different optical burst transmitters and 80 different optical burst receivers are required for the O/E/O regeneration.

In view of the above, it is an object of the present invention to provide a method for transmitting data bursts in an optical network which overcomes the aforesaid drawbacks. In particular, it is an object of the presence invention to provide a method for transmitting data bursts in an optical network, in particular, but not exclusively, an optical ring network, which allows maintaining the alignment of the data bursts propagating in the optical network while avoiding the need for O/E/O regeneration.

According to a first aspect, the present invention provides a method for transmitting data bursts in a communication network, the communication network comprising a number of nodes, wherein each node is configured to use respective timeslots for transmitting the data bursts, the method comprising:
a) selecting a root node amongst the number of nodes;
b) identifying at least one burst synchronization path from the root node within the communication network, the at least one burst synchronization path comprising the number of nodes;
c) at each of the nodes other than the root node, aligning the used timeslots to the timeslots used by the preceding node along the at least one burst synchronization path; and
d) from a source node of the communication network, transmitting a data burst to a destination node along a route comprised within the at least one burst synchronization path.

Preferably, the method further comprises, prior to step a), distributing a clock synchronization from a node of the communication network to the other nodes of the communication network.

Preferably, distributing is performed using a control channel of the communication network.

Profitably, the at least one burst synchronization path is a is a loop-free directed graph.

According to embodiments of the present invention, at step b) the identifying comprises determining, for a node of the communication network, at least one selectable burst synchronization path of the at least one burst synchronization path so that a route may be established from the node to any other node of the communication network which does not pass through the root node.

Preferably, at the node the at least one selectable burst synchronization path is stored within a routing table.

Preferably, at step c) aligning comprises sending, from the root node burst synchronization data and, at any subsequent node along the at least one burst synchronization path, anchoring a starting time of the timeslots to a time of arrival of the burst synchronization data.

Preferably, sending comprises sending the burst synchronization data embedded in data bursts inside the timeslots used by the root node.

According to embodiments of the present invention, at step d) transmitting comprises selecting one path of the at least one selectable burst synchronization path, determining the route along the selected path and transmitting the data burst along the selected path.

Profitably, in case of a failure within the at least one burst synchronization path, the method further comprises selecting a further root node downstream the failure and identifying at least one further burst synchronization path from the further root node within the communication network comprising the number of nodes.

According to an advantageous variant, the method further comprises, at a node of the communication network.
- measuring a burst phase offset between a data burst received at the node and the timeslots used at the node; and
- delaying the at least one data burst by an overall delay suitable for compensating the burst phase offset.

According to a second aspect, the present invention provides a computer program product comprising computer-executable instructions for performing, when the program is run on at least one computer, the method as set forth above.

According to a third aspect, the present invention provides a communication network suitable for implementing the method as set forth above.

Preferably, the communication network is an optical burst switching network.

Preferably, the communication network is an optical ring network.

### Brief description of the drawings

Embodiments of the invention will be better understood by reading the following detailed description, given by way of example and not of limitation, to be read with reference to the accompanying drawings, wherein:
- Figure 1 schematically shows an exemplary optical communication network having a single ring topology;
- Figure 2 shows a block scheme of a node of the optical communication network of Figure 1;
- Figure 3 schematically shows the optical communication network of Figure 1 in an operational scenario;
- Figures 4a and 4b shows, respectively, a time diagram illustrating the operation of a known optical communication network and a time diagram illustrating the operation of an optical communication network according to the present invention;
- Figures 5a and 5b shows, respectively, a first path and a second path across the optical communication network of Figure 1 according to embodiments of the present invention;
- Figure 5c is a table illustrating a step of identifying a burst synchronization path between any two nodes of the optical communication network of Figure 1 according to embodiments of the present invention;
- Figure 6 is a flow-chart illustrating further steps of the method according to the present invention;
- Figure 7a schematically shows an exemplary double-ring optical communication network and Figure 7b schematically shows the optical communication network of Figure 7a in presence of a failure; and
- Figure 8 schematically shows a variable delay element implementing an advantageous variant of the method of the present invention.

### Detailed description of preferred embodiments of the invention

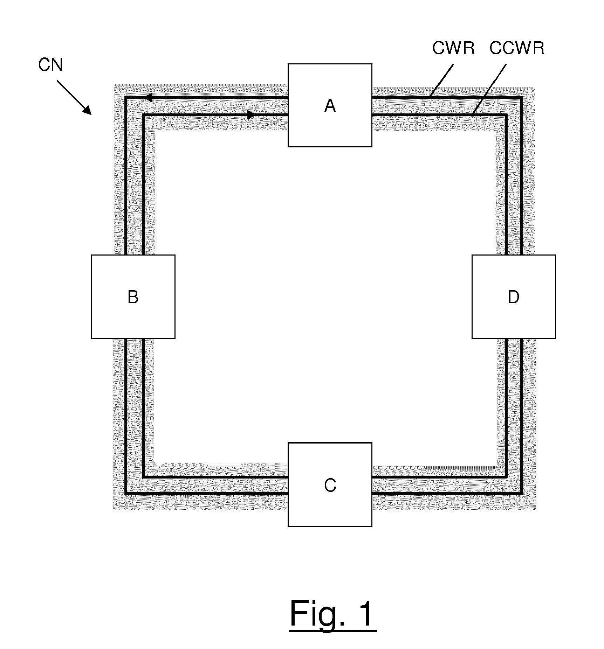

Figure 1 shows an exemplary communication network CN suitable for implementing the method according to embodiments of the present invention. The communication network CN preferably is an optical communication network. In particular, the communication network CN is an optical burst switching network. The communication network may be a metropolitan area network (MAN) interconnecting a number of clients, i.e. a number of access networks and/or individual users. The communication network may transport different types of traffic, such as Ethernet traffic, IP traffic, ATM traffic, SDH or SONET traffic.

The exemplary communication network CN of Figure 1 comprises a number of nodes arranged according to a single ring topology. The single ring network CN of Figure 1 is merely exemplary as the method of the present invention may as well be implemented when other network topologies, such as multi-ring or meshed topologies, are considered, at it will be clearer herein after.

In particular, by way of non limiting example, the communication network CN comprises four nodes A, B, C, D. The communication network CN further comprises a number of physical links (e.g. fiber optics links) connecting the nodes A, B, C, D according to a single ring topology comprising two counter-rotating rings. In particular, the communication network CN comprises a clockwise ring CWR and a counterclockwise ring CCWR.

Each ring CWR, CCWR may support the propagation of the light at a number of wavelengths. For instance, each ring CWR, CCWR may support the propagation of the light at a number of different wavelengths according to a WDM (Wavelength Division Multiplexing) or DWDM (Dense Wavelength Division Multiplexing) scheme.

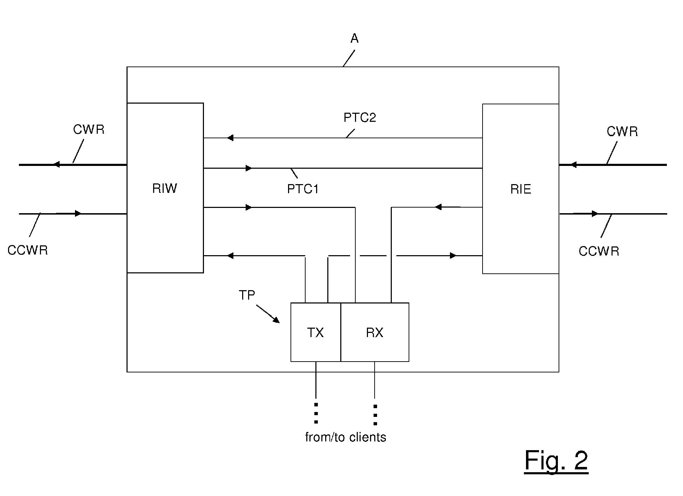

Figure 2 shows a block scheme of node A of the communication network CN. All the other nodes B, C, D of the communication network CN have a similar structure.

Node A preferably comprises a number of network line interface modules, and at least one transponder (transmitter/receiver unit). The node A of Figure 2 preferably comprises one transponder TP, a west ring interface module RIW, an east ring interface module RIE. Node A may comprise further components that are not shown in Figure 2 since they are not relevant to the present description.

The transponder TP in turn comprises an optical burst transmitter TX and an optical burst receiver RX.

The optical burst transmitter TX is configured to receive data from a number of clients of the communication network CN and to generate data bursts comprising the clients' data at a first wavelength λ1 for transmission towards another node of the communication network CN. Each data burst comprises a data burst header (which in turn may comprise a connectivity identifier, a timestamp and an error check) and a data burst payload. The data bursts has a fixed data burst duration.

In particular, the optical burst transmitter TX shown in Figure 2 is capable to generate data burst for transmission to another node B, C, D towards the west direction (via the west ring interface module RIW) or towards the east direction (via the east ring interface module RIE), i.e. along the clockwise ring CWR or along the counter-clockwise ring CCWR, respectively.

Moreover, the optical burst transmitter TX is configured to generate data bursts according to a time slotted scheme, i.e. to generate data bursts within timeslots T1, ..., TN of fixed duration, e.g. 5 µs, corresponding to the data burst duration. In particular, the optical burst transmitter TX generates data bursts directed to a number M of destinations within a number N of consecutive timeslots identifying a scheduling period, M and N being integer numbers with M≤N. Scheduling periods repeat cyclically at a node. Within a scheduling period, each destination node has associated one or more timeslots, depending on the type of traffic being carried by the data bursts towards that destination node. Once a certain number of timeslots (in fixed positions within the scheduling period) are assigned to each possible destination node, the optical burst transmitter TX makes use of these fixed timeslots for generating the data bursts directed to the corresponding destination node, in subsequent scheduling periods. For instance, a packet traffic flow requesting low latency is assigned more than one timeslot within each scheduling period. A constant bit rate packet traffic flow may be assigned one fixed-position timeslot within the scheduling period, e.g. the second timeslot T2 of each scheduling period. In this case, it follows that the delay between two consecutive data bursts of a constant bit rate traffic is equal to the scheduling period. When lower delay is needed, the constant bit rate packet traffic flow may be assigned more that one fixed-position timeslot each scheduling period.

The optical burst receiver RX is configured to receive data bursts from the other nodes of the communication network CN. In particular, the optical burst receiver RX of Figure 2 is capable of receiving data bursts from another node B, C, D along the clockwise ring CWR (via the east ring interface module RIE) or the counter-clockwise ring CCWR (via the west ring interface module RIW). The optical burst receiver RX is a tunable optical burst receiver, i.e. a optical burst receiver which is capable of receiving data bursts at any one of the wavelengths supported by the communication network CN.

The data burst duration further preferably comprises a guard interval, prefixed to the data burst header, which is the time needed to the laser of the tunable optical burst receiver for switching between one wavelength and another. The guard interval is preferably equal to about 5%-10% of the burst duration. The optical burst transmitter TX is preferably configured to transmit, during the guard interval, a fixed sequence of data.

A node of the communication network CN can comprise more than one optical burst receiver. The number of optical burst receivers may depend on the dimensioning of the node with respect to the traffic to be inserted/dropped to/from the other nodes of the communication network. In the following, by way of non limiting example, one optical burst receiver RX will be considered as illustrated in Figure 2.

The network line interface modules of the node are configured to transmit/receive data bursts to/from other nodes of the communication network CN. In particular, the west ring line interface module RIW of Figure 2 is configured to transmit data bursts generated at the node A and/or passing through node A along the clockwise ring CWR. Moreover, the west ring line interface module RIW is configured to receive data bursts from the counter-clockwise ring CCWR and either to forward such data bursts to the optical burst receiver RX or to the east ring line interface module RIE.

Analogously, the east ring line interface module RIE of Figure 2 is configured to transmit data bursts generated at the node A and/or passing through node A along the counter-clockwise ring CCWR. Moreover, the east ring line interface module RIE is configured to receive data bursts from the clockwise ring CWR and either to forward such data bursts to the optical burst receiver RX or to the west ring line interface module RIW.

More in particular, the west ring line interface module RIW of Figure 2 may comprise, on a receiving side thereof, a splitter which is configured to receive the data bursts propagating along the counter-clockwise ring CCWR and to split this signal between the east ring line interface module RIE, via a first pass-through connection PTC1, and the optical burst receiver RX. The data bursts directed towards the optical burst receiver RX are the data bursts dropped by node A from the counter-clockwise ring CCWR. The data bursts directed towards the east ring line interface module RIE along the first pass-through connection PTC1 are the data bursts which pass through node A directed to another node B, C, D along the counter-clockwise ring CCWR. Moreover, the west ring line interface module RIW may comprise, in a transmission side thereof, a wavelength selective switch (WSS) which is configured to collect data bursts from the optical burst transmitter TX and from a second pass-through connection PTC2 (along which data bursts pass through node A directed to another node B, C, D over the clockwise ring CWR) and to transmit these data bursts over the clockwise ring CWR.

Analogously, the east ring line interface module RIE of Figure 2 may comprise a splitter which is configured to receive the data bursts propagating along the clockwise ring CWR and to split this signal between the west ring line interface module RIW, via the second pass-through connection PTC2, and the optical burst receiver RX. The data bursts directed towards the optical burst receiver RX are the data bursts dropped by node A from the clockwise ring CWR. The data bursts directed towards the west ring line interface module RIW along the second pass-through connection PTC2 are the data bursts which pass through node A directed to another node B, C, D along the clockwise ring CWR. Moreover, the east ring line interface module RIE may comprise a wavelength selective switch (WSS) which is configured to collect data bursts from the optical burst transmitter TX and from the first pass.-through connection PTC1 and to transmit these data bursts over the counter-clockwise ring CCWR.

The network line interface modules may comprise other components, such as amplifiers, that will not be described in greater details they are not relevant to the present description.

In other words, the west ring interface module RIW and the east ring interface module RIE implement an optical add-drop multiplexing (OADM) function at the node A both for the data bursts propagating along the clockwise ring CWR and the data bursts propagating along the counter-clockwise ring CCWR.

Preferably, the nodes A, B, C, D of the communication network CN are synchronous, i.e. the nodes A, B, C, D have the same clock frequency. Preferably, each node has a clock reference unit which is able to receive a clock synchronization signal from which it may recover a clock frequency to be used in the internal components of the node. Preferably, one node within the communication network selects a clock synchronization source generating the clock synchronization signal and distributes the clock synchronization signal to all the other nodes of the communication network CN. Distribution of the clock synchronization signal is preferably performed by using a control channel of the communication network CN. The clock synchronization source may be selected from a set of predefined sources comprising, for instance, an external primary reference clock (PRC) source.

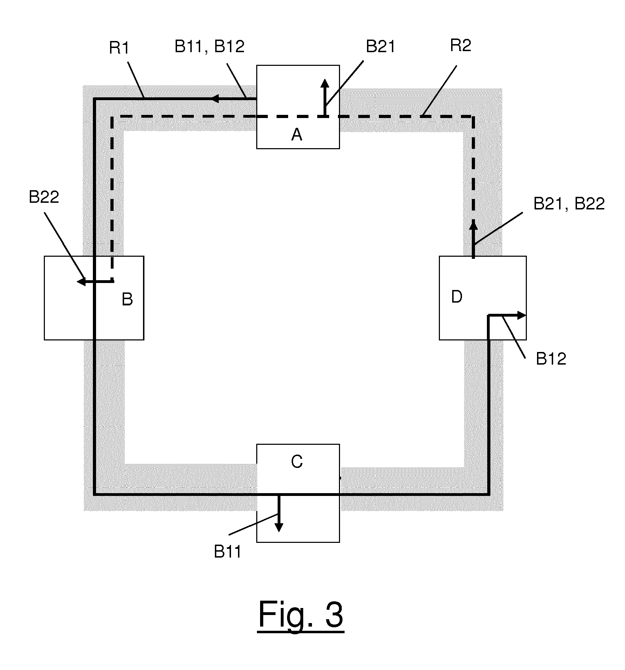

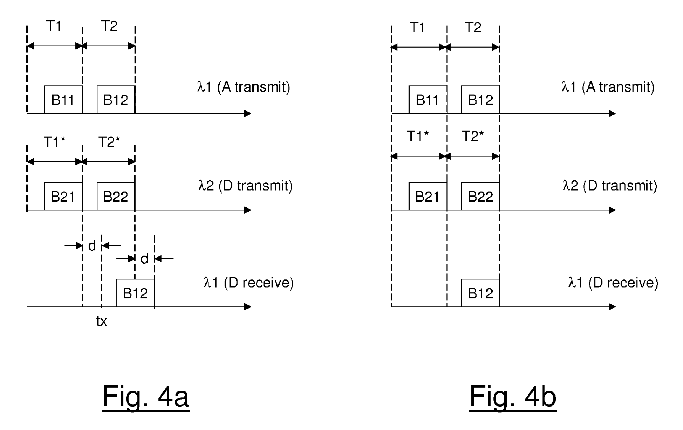

Figures 3 and 4a show the operation of the communication network CN implementing a known optical burst switching scheme. It is assumed that the transmitter TX at node A is generating a first data burst B11 and a second data burst B12 at a first wavelength λ1. The first data burst B11 is directed to node C, while the second data burst B12 is directed to node D along a first route R1 (indicated by the solid line in Figure 3) comprised within the counter-clockwise ring CCWR. The top graph in Figure 4a shows the first data burst B11 being generated at node A in a first timeslot T1 and the second data burst B12 being generated at node A in a second timeslot T2. The timeslot length is the burst duration, which comprises the guard interval, i.e. the fixed period prefixed to any data burst for assuring that the tunable optical burst receiver at the node be capable of switching from one wavelength to another, as described above. The guard interval is shown in Figure 4a as a data-free period before each data burst B11, B12, even if during the guard interval a fixed sequence of data may be transmitted, as described above. The first data burst B11 propagates along the counter-clockwise ring CCWR, passes-through the node B and reaches node C via its east ring line interface RIE, and it is dropped by the receiver RX of node C. The second data burst B12 propagates along the counter-clockwise ring CCWR, passes-through nodes B and C and reaches node D via its east ring line interface RIE, and it is to be dropped by the receiver RX of node D. In the meantime, the transmitter TX of node D may be generating a third data burst B21 and a subsequent fourth data burst B22 at a second wavelength λ2, the third data burst B21 being directed towards node A and the fourth data burst B22 being directed towards node B along a second route R2 (indicated by the dashed line in Figure 3) comprised within the counter-clockwise ring CCWR. The middle graph in Figure 4a shows the third data burst B21 being generated at node D in its first timeslot T1* and the fourth data burst B22 being generated at node D in its second timeslot T2*.

The local time at which the second data burst B12 arrives at node D is indicated as tx. In this exemplary situation, this time tx is not aligned with the starting time of the second timeslot T2* at node D since the second data burst B12 has accumulated a delay depending on the length of the fiber along which the second data burst B12 is propagated between node A and node D. This delay includes the effect of the chromatic dispersion associated to the first wavelength λ1. The effect of the propagation delay is that the time tx of arrival of the second data burst B12 is not aligned with the starting time of the second timeslot T2* but instead it may show a delay d. Further, the arrival time of the second data burst B12 is neither aligned with respect to the starting time of other subsequent timeslots T3*, T4*, ... at node D. In other words, received data bursts are not aligned with the timeslots of generated data bursts. This may result in a incorrect dropping of the second data burst B12 by the receiver RX and in consequent loss of data.

According to preferred embodiments, the present invention provides a method for transmitting data bursts in the communication network CN which comprises a preliminary step of identifying within the communication network CN one or more burst synchronization paths along which the data bursts are routed.

The step of identifying the burst synchronization paths is preferably performed by a control plane of a network node configured to implement a protocol for finding paths within the communication network, such as the Open Shortest Path First (OSPF) protocol or the Spanning Tree Protocol (STP) .

Identifying the burst synchronization paths preferably comprises selecting one or more root nodes within the communication network CN and then determining one or more possible paths through the communication network CN which, starting from a root node, allow establishing at least one route between any two nodes of the network. In other words, each burst synchronization path comprises all nodes of the communication network and allows reaching each node from any other node of the communication network following a given direction. Preferably, a synchronization path is a loop-free directed graph.

Preferably, in a ring communication network, either a single ring network or a multi-ring network, one burst synchronization path is identified for each direction (i.e. counter-clockwise and clockwise). The burst synchronization path for one direction may have a different root node than the burst synchronization path for the other direction.

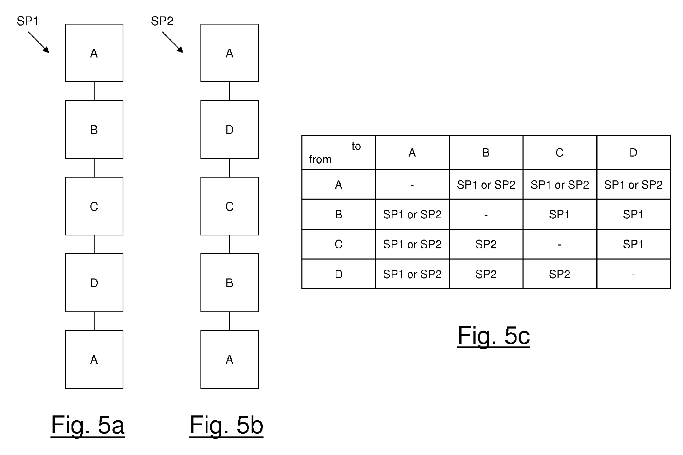

In the ring network of Figure 2, node A may be selected as common root node for the counter-clockwise direction and for the clockwise direction. Then, a first burst synchronization path SP1 is identified along the counter-clockwise ring CCWR and a second burst synchronization path SP2 is identified along the clockwise ring CWR. Figures 5a and 5b show, respectively, the first burst synchronization path SP1 and the second burst synchronization path SP2. The first burst synchronization path comprises nodes A-B-C-D-A and the second burst synchronization path comprises nodes A-D-C-B-A.

For each burst synchronization path, each node of the path, starting from the first node adjacent to the root node, preferably aligns its timeslots with the timeslots of the preceding node along the burst synchronization path. This means that along each burst synchronization path, at each node belonging to the path, in working conditions, the received data bursts will be aligned with the timeslots of transmitted data bursts, as it will be described herein after.

Alignment of the timeslots is performed as described in the following. After deployment of the communication network CN and after identification of the burst synchronization paths, for each burst synchronization path, the root node of the path preferably sends burst synchronization data embedded in data bursts (i.e. over the same channel) within the timeslots of a scheduling period. On reception of the burst synchronization data, the other nodes of the burst synchronization path recover the time of arrival of the burst synchronization data. Then, each node preferably anchors the starting time of its scheduling period (i.e. the starting time of its first timeslot) and the starting time of the timeslots within a scheduling period to the time of arrival of the burst synchronization data. Further, each node preferably forwards the burst synchronization data to the next node along the burst synchronization path. In this situation, each node is "burst synchronized" with respect to the previous node along the burst synchronization path, i.e. data bursts are sent and received in corresponding timeslots at the nodes belonging to the burst synchronization path. In the following, this situation will be also referred to as the situation in which the timeslots at the nodes of a burst synchronization path are aligned. This situation emulates a condition of zero propagation delay for the data bursts of a burst synchronization path.

In particular, with reference to, for instance, the first burst synchronization path SP1 of Figure 5a, node A sends to node B burst synchronization data within a number of timeslots T1, T2, ..., TN of a scheduling period. Node A transmits the burst synchronization data in the timeslots T1, T2, ..., TN. Node B receives the burst synchronization data and preferably anchors the starting time of its local scheduling period to the time of arrival of the burst synchronization data. Therefore, node B preferably anchors the starting time of its first timeslot and the subsequent timeslots to the arrival time of the burst synchronization data and transmits the same burst synchronization data to node C in timeslots which are aligned with the corresponding timeslots at the root node A. Therefore when, in an operational situation, node A will transmit a data burst in its first timeslot T1 towards node B, node B will receive the data burst within its own first timeslot; when node A will transmit a data burst in its second timeslot T2 towards node B, node B will receive the data burst within its own second timeslot, and so on.

Advantageously, as the communication network CN is synchronous, alignment between the timeslots can be maintained over time.

Node C preferably receives the burst synchronization data from node B and preferably anchors the starting time of its local scheduling period to the time of arrival of the burst synchronization data. Then it transmits to node D the burst synchronization data in timeslots which are aligned with the corresponding timeslots at node B. Therefore, a data burst transmitted by node A in its first timeslot T1 will arrive in the first timeslot at node B (which is burst synchronized to node A) and also in the first timeslot at node C (which is burst synchronized to node B). Analogously, node D preferably receives the burst synchronization data and preferably anchors the starting time of its local scheduling period to the time of arrival of the synchronization data, aligning its timeslots T1*, T2*, ..., TN* to the corresponding timeslots at node C.

The same procedure applies for the second burst synchronization path SP2.

The procedure described above advantageously allows to fictitiously compensate the propagation delays between the nodes by aligning the timeslots at the nodes belonging to a burst synchronization path. Indeed, irrespective of the delay due to the propagation of the data bursts between any two nodes of the path, the starting time of the timeslots at any node is adjusted so that it is synchronized for all the nodes of a burst synchronization path. Moreover, the procedure above for aligning the timeslots advantageously adapts to possible changes of the propagation delays over time.

According to the present invention, once the burst synchronization paths are identified, a step of determining the burst synchronization paths selectable by each node of the communication network for reaching any other node of the network is performed. In particular, each selectable burst synchronization path is determined so that a route may be established to the destination node which does not pass through the root node of the burst synchronization path.

Considering the single ring network of Figure 2, when node B has to transmit a data burst to node C, the only possible selectable burst synchronization path is the first burst synchronization path SP1. Indeed, if a route is established along the second burst synchronization path SP2, the data burst shall be sent from node B (which transmits in timeslots aligned with the timeslots used by node A) to node A. At node A, the arrival time of the data burst may not correspond to the starting time of a timeslot. Indeed, the data burst arrives at node A with a delay depending on the propagation of the data burst along the optical fiber from node B to node A and it may not correspond to an integer number of timeslots at node A. Since node A is the root node, the timeslots of node B are aligned with the timeslots at node A (and the delay due to the propagation from node A to node B is fictitiously "compensated") but the opposite does not hold.

Therefore, when neither the source node nor the destination node is the root node, the route may belong to only one burst synchronization path. When, however, the source node or the destination node is the root node, any route from/to such node may belong to any one of the burst synchronization paths.

The table in Figure 5c shows the possible determination of the selectable burst synchronization path(s) for transmitting data bursts between any two nodes of the communication network CN of Figure 2, once the first burst synchronization path SP1 and the second burst synchronization path SP2 are identified. For instance, node A (which is the root node), may transmit data bursts to any of nodes B, C and D along either the first synchronization path SP1 or the second synchronization path SP2. Instead, node B may transmit data bursts towards node C or node D only along the first synchronization path SP1. Moreover, node C may transmit data bursts towards node B along the first synchronization path SP1 while it may transmit data bursts towards node D along the second synchronization path SP2.

At the end of the preliminary steps of identifying the burst synchronization paths and determining the selectable burst synchronization path(s), each node preferably stores, within a storage unit comprised therein (not shown in Figure 2), the information about the selectable burst synchronization path(s). Such information may be stored in a routing table. In the exemplary situation described above with reference to the burst synchronization paths SP1, SP2 of Figures 5a-5b, node A stores the information contained in the first row of the table of Figure 5c, node B stores the information contained in the second row, node C stores the information contained in the third row and node D stores the information contained in the fourth row.

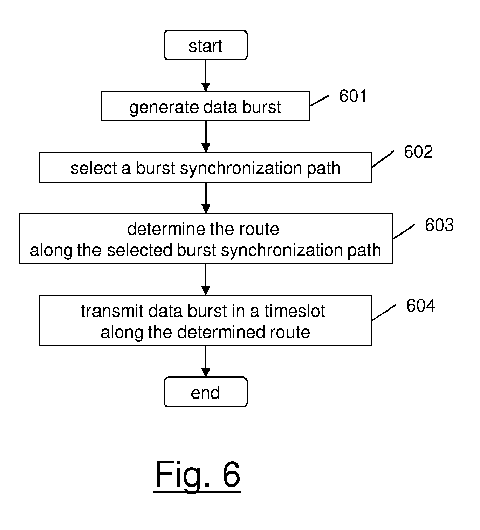

Figure 6 is a flowchart illustrating further steps of the method according to the present invention for transmitting a data burst from a node of the communication network CN, once the preliminary steps described above are completed. At step 601, a data burst is generated at the node by assembling clients' data units as described above. The operation of generating a data burst will not de described in greater detail since it is not relevant to the present invention. The data burst has associated a destination address which may be carried by the control packet associated to the data burst. At step 602, the node uses the destination address for recovering, from the storage unit, the information about the selectable burst synchronization path(s) allowing to reach the destination node. If more than one burst synchronization path are selectable, the node preferably selects one of the possible burst synchronization paths. Then, at step 603, the node determines the route of the data burst along the selected burst synchronization path up to the destination node. If only one burst synchronization path is selectable, the node preferably determines the route of the data burst along this burst synchronization path up to the destination node. Once determined the route, at step 604 the node preferably transmits the data burst in a timeslot within its scheduling period, towards the first node of the determined route.

The method above will be now described with reference again to the exemplary situation of Figure 3. The transmission of data bursts according to the method of the present invention is illustrated in Figure 4b. It is assumed that at step 601 the transmitter TX of node A generates the first data burst B11 in the first timeslot T1 at a first wavelength λ1 (see top graph in Figure 4b). The first data burst B11 is directed to node C. At step 602, node A recovers from its storage unit the information that both the first burst synchronization path SP1 and the second burst synchronization path SP2 are selectable. It is assumed that node A selects the first burst synchronization path SP1. In step 603 node A determines the route of the first data burst B11 along the selected first burst synchronization path SP1, i.e. the route A-B-C, and in step 604 transmits the first data burst B11 to node B via the west ring line interface RIW. Again, at a new step 602, the transmitter TX of node A generates the second data burst B12 in the second timeslot T2 at a first wavelength λ1 (see top graph in Figure 4b). The second data burst B12 is directed to node D. At step 602, node A recovers from its storage unit the information that both the first burst synchronization path SP1 and the second burst synchronization path SP2 are selectable. It is assumed that node A selects the first burst synchronization path SP1. At step 603, node A determines the route of the second data burst B12 along the selected first burst synchronization path SP1, i.e. the route A-B-C-D, and in step 604 transmits the second data burst B12 to node B via the west ring line interface RIW.

The first data burst B11 propagates along the counter-clockwise ring CCWR, passes-through the node B and reaches node C via its east ring line interface RIE, and it is dropped by the receiver RX of node C. The second data burst B12 propagates along the counter-clockwise ring CCWR, passes-through nodes B and C and reaches node D via its east ring line interface RIE, where it is dropped by the receiver RX of node D.

In the meantime, the transmitter TX of node D may be generating a third data burst B21 in its first timeslot T1* and a subsequent fourth data burst B22 in its second timeslot T2*, at a second wavelength λ2, the third data burst B21 being directed towards node A and the fourth data burst B22 being directed towards node B (see the middle graph in Figure 4b).

According to the method of the present invention, at node D the time of arrival of the second data burst B12 is now aligned with the starting time of the second timeslot T2*. In other words, the received data bursts are aligned with the timeslots of transmitted data bursts.

Therefore, the method of the present invention advantageously allows maintaining the alignment of the data bursts propagating through the communication network CN. Data bursts may be correctly dropped at the nodes of the network, loss of data is avoided and the transmission efficiency may be advantageously optimized. Moreover, no O/E/O regeneration is needed, as data bursts need not be buffered for compensating the propagation delays. Compensation of the delays is obtained simply by transmitting along burst synchronization paths, wherein each burst synchronization path comprises nodes having aligned timeslots. Therefore, implementation of the method is cheaper and simpler with respect to known implementations of the optical burst switching scheme.

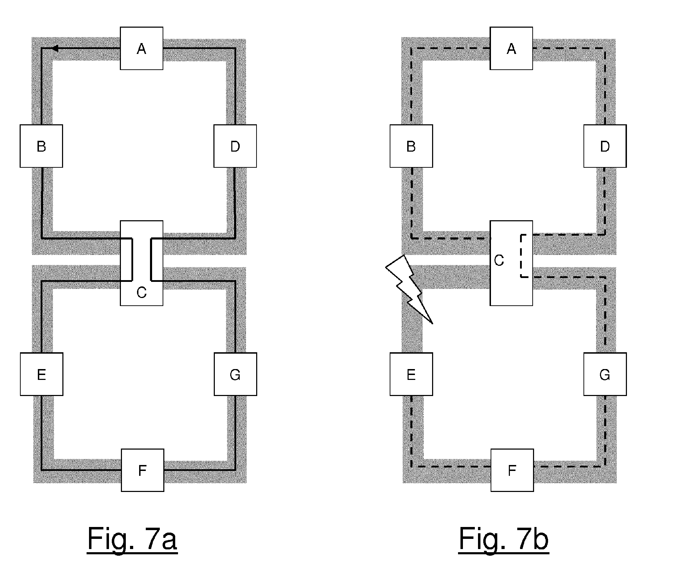

As already described above, the method of the present invention may be applied to different network topologies (single ring, multi-ring, meshed). Figure 7a, for instance, shows a double-ring network. In such a network, node C is configured to handle data burst propagating along the two rings independently at the same time. According to the method of the present invention, in this network node A may be selected as common root node for the two directions (counter-clockwise and clockwise) and two burst synchronization paths may be identified, one path being A-B-C-E-F-G-C-D-A (indicated by the solid line in Figure 7a) in the counter-clockwise direction and the other being A-D-C-G-F-E-C-B-A (non indicated in Figure 7a) in the clockwise direction. Identifying the burst synchronization paths, determining the selectable burst synchronization path(s) and transmitting data bursts along a route belonging to the selected burst synchronization path may be implemented in the same manner as already described above, and therefore a detailed description of the steps of the method of the present invention with reference to the double-ring network of Figure 7a will not be repeated. Also alignment of the timeslots is performed as already described above.

In case of failure affecting one node or a link of a burst synchronization path, the method of the present invention provides for selecting a new root node and identifying a new burst synchronization path starting from the new root node for circumventing the failure. In particular, according to the method of the present invention, the new root node is selected as the node of the burst synchronization path downstream the failure. With reference to the double-ring network of Figure 7a, it is assumed that a failure occurs on the link between node C and node E (see Figure 7b), affecting both the burst synchronization path in the counter-clockwise direction and the burst synchronization path in the clockwise direction. In this case, the method of the present invention provides for selecting a new root node for the counter-clockwise direction and a new root node for the clockwise direction, namely node E for the counter-clockwise direction and node C for the clockwise direction. Therefore, the new two burst synchronization paths become E-F-G-C-D-A-B-C (indicated by the dashed line in Figure 7b) in the counter-clockwise direction and C-B-A-D-C-G-F-E in the clockwise direction (not indicated in Figure 7b).

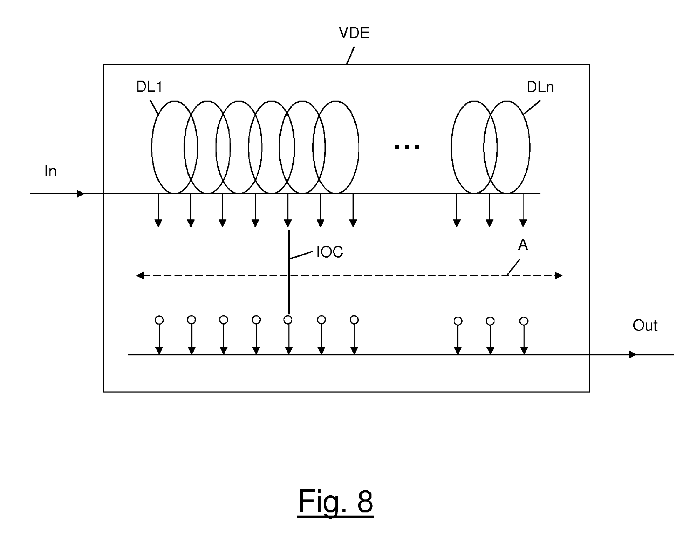

Herein after, with reference to Figure 8, an advantageous variant will be described, which advantageously allows transferring data bursts also through the root node of a burst synchronization path as determined by the method described above.

According to such variant, at least one variable delay element VDE is introduced into the communication network CN. Preferably, in a ring network, either a single ring network or a multi-ring network, one single variable delay element is introduced for each direction (counter-clockwise and clockwise). Each variable delay element VDE is preferably introduced at a node of the communication network CN. Preferably, in a ring network, either a single ring network or a multi-ring network, the variable delay element VDE is inserted in a root node.

Preferably, the variable delay element VDE comprises an input line In, an output line Out, a number n of optical delay lines DL1, ..., DLn and a connection IOC suitable for connecting the input line In or the output of each delay line DL1, ..., DLn with the output line Out. The variable delay element VDE further comprises a control unit not shown in Figure 8. Alternatively, the variable delay element VDE may be connected to a control unit of the node at which the variable delay element VDE is located. The control unit is preferably configured to:
- measure a burst phase offset as an amount of time by which received data bursts are not aligned with the timeslots of data bursts transmitted at the node that comprises the variable delay element. This is the case, for instance, when data bursts pass through a root node of a burst synchronization path according to the method described above after having propagated along the path; and
- command operation of the connection IOC in order to connect the input line In or any one of the outputs of the delay lines DL1, ..., DLn to the output line Out, as represented by the arrow A in Figure 8, in order to compensate the measured burst phase offset, as it will be described in greater detail herein after.

In the variable delay element VDE, each delay line DL1, ..., DIn is preferably configured to introduce a delay which is equal to a fraction of the burst duration such that the sum of the delays of all the delay lines DLi, ..., DLn does not exceed the burst duration. Preferably, each delay line DL1, ..., DLn is configured to introduce a same elementary delay. Therefore, the variable delay element VDE is configured to introduce a delay equal to (0, ..., 1) x burst duration, i.e. the minimum delay is 0 and the maximum delay is equal to the burst duration, and the introduced delay varies by discrete steps, all steps being equal to a same amount of time (i.e. the elementary delay).

The number n of delay lines DL1, ..., DLn is preferably chosen on the basis of a predetermined delay precision, expressed in terms of a fraction of the guard interval.

If, for example, the predetermined delay precision is half the guard interval, and the guard interval is equal to 0.5 µs, the number n of delay lines DL1, ..., DLn is equal to 20, each delay line DL1, ..., DLn introducing an elementary delay equal to 0.25 µs. Therefore, the delay introduced by the variable delay element VDE may vary by steps of 0.25 µs.

According to this advantageous variant, the control unit of each variable delay element VDE monitors the data bursts passing through it and determines the burst phase offset. Preferably, monitoring is performed periodically. The burst phase offset may be determined by measuring an average delay between sent data bursts and received data bursts at the node comprising the variable delay element VDE. The computation may be performed on a wavelength basis (in this case, one value of the burst offset is computed for each wavelength). The burst offset as a result of the measurement may be expressed as a relative number, e.g. 0, 1, 2, ... burst durations, or as a time, e.g. in fractions of a second.. Then, the control unit preferably operates the connection IOC to connect the output line Out with the output of a delay line DL1, ..., DLn so as to introduce an overall delay suitable for compensating the burst phase offset. For instance, if said overall delay is equal to 3 µs, and each delay line DL1, ..., DLn introduces an elementary delay of 0.25 µs, the control unit operates the connection IOC to connect the output line Out with the output of the twelfth delay line DL12.

When a data burst is received by the node which comprises the variable delay element VDE, the data burst enters the variable delay element VDE along its input line In and propagates along the delay lines DL1, ..., DLn, up to the delay line which is connected to the output line Out of the variable delay element VDE by the connection IOC. This way, the data burst is delayed by the overall delay suitable for compensating the burst phase offset measured by the control unit, so that it is aligned with a timeslot. If, for instance, the data burst is late with respect to the ninth timeslot, after passing through the variable delay element VDE the data burst will be aligned with the tenth timeslot. As the data burst exiting the variable delay line VDE is now aligned with a timeslot at the node, it may be correctly dropped or it may be passed through with maximum efficiency. The data burst may also be passed through a root node of a burst synchronization path without introducing delay.

This advantageous variant allows maintaining the alignment of data bursts when they pass through a root node of a burst synchronization path which introduces a delay, but also in situations in which the alignment achieved by implementing the method described above is lost. Such situations may arise, for instance, when the delay due to propagation along the optical fiber between two nodes changes due to intervening factors, such as a change in the temperature affecting the optical properties of the optical fiber connecting the nodes. Moreover, thanks to the variable delay element, the alignment of data bursts can be advantageously maintained also when a new root node shall be selected and a burst synchronization path shall be modified after a failure occurs. Therefore, the variable delay element allows compensating the variations in the propagation delays between the nodes in a dynamic manner as it constantly monitors the alignment of data bursts and may react to compensate any misalignment possibly raising.

Further, advantageously, the variable delay element VDE is a purely optical element. Indeed, the lines and the delay lines are optical fibers. Hence, O/E/O regeneration is advantageously avoided.

The functions of the various elements shown in the Figure 2, including any functional blocks labeled as "device", "unit", "block" or "processing unit", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the terms "processing unit", "device", "block" or "unit" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like, as that of Figure 6, represent various processes which may be substantially represented in computer readable medium and so executed by a computer or processor, whether or not such computer or processor is explicitly shown.

## Claims

1. A method for transmitting data bursts in a communication network (CN), said communication network (CN) comprising a number of nodes (A, B, C, D), wherein each of said nodes (A, B, C, D) is configured to use respective timeslots (T1, T2, T1*, T2*) for transmitting said data bursts, said method comprising:
a) selecting a root node (A) amongst said number of nodes (A, B, C, D);
b) identifying at least one burst synchronization path (SP1, SP2) from said root node (A) within said communication network (CN), said at least one burst synchronization path (SP1, SP2) comprising said number of nodes (A, B, C, D);
c) at each of said nodes (B, C, D) other than said root node (A), aligning the used timeslots to the timeslots used by the preceding node along said at least one burst synchronization path (SP1); and
d) from a source node (A) of said communication network (CN), transmitting a data burst (B11, B12) to a destination node (D) along a route comprised within said at least one burst synchronization path (SP1).

2. The method according to claim 1, wherein it further comprises, prior to said step a), distributing a clock synchronization from a node of the communication network (CN) to the other nodes of the communication network (CN).

3. The method according to claim 2, wherein said distributing is performed using a control channel of the communication network (CN).

4. The method according to any of the preceding claims, wherein said at least one burst synchronization path (SP1, SP2) is a is a loop-free directed graph.

5. The method according to any of the preceding claims, wherein at said step b) said identifying comprises determining, for a node of said communication network (CN), at least one selectable burst synchronization path of said at least one burst synchronization path (SP1, SP2) so that a route may be established from said node to any other node of the communication network (CN) which does not pass through the root node.

6. The method according to claim 5, wherein at said node said at least one selectable burst synchronization path is stored within a routing table.

7. The method according to any of claims 2 to 6, wherein at said step c) said aligning comprises sending, from the root node (A) burst synchronization data and, at any subsequent node along said at least one burst synchronization path (SP1, SP2), anchoring a starting time of the timeslots to a time of arrival of said burst synchronization data.

8. The method according to claim 7, wherein said sending comprises sending said burst synchronization data embedded in data bursts inside the timeslots used by said root node.

9. The method according to any one of claims 5 to 8, wherein at said step d) said transmitting comprises selecting one path of said at least one selectable burst synchronization path, determining said route along said selected path and transmitting said data burst along said selected path.

10. The method according to any of the preceding claims, wherein, in case of a failure within said at least one burst synchronization path, the method further comprises selecting a further root node downstream said failure and identifying at least one further burst synchronization path from said further root node within said communication network (CN) comprising said number of nodes (A, B, C, D).

11. The method according to any of the preceding claims, wherein it further comprises, at a node of said communication network (CN).
- measuring a burst phase offset between a data burst received at the node and the timeslots used at the node; and
- delaying said at least one data burst by an overall delay suitable for compensating said burst phase offset.

12. A computer program product comprising computer-executable instructions for performing, when the program is run on at least one computer, the method according to any of the preceding claims.

13. A communication network (CN) suitable for implementing the method according to any of claims 1 to 11.

14. The communication network (CN) according to claim 13, wherein said communication network (CN) is an optical burst switching network.

15. The communication network (CN) according to claim 13 or 14, wherein the communication network (CN) is an optical ring network.
